# EUROPEAN PATENT SPECIFICATION

(11) **EP 3 689 729 B1**
(45) Date of publication and mention of the grant of the patent: **07.06.2023**
(21) Application number: 20154139.8
(22) Date of filing: 28.01.2020
(51) Int. Cl.: B62M 3/08

(54) **ANTI-SKID-PEDAL**
ANTI-RUTSCH PEDAL
PÉDALE ANTIDÉRAPANTE

(30) Priority: 29.01.2019 TW 108103395; 29.01.2019 TW 108201425 U
(43) Date of publication of application: 05.08.2020
(73) Proprietor: Marwi Europe B.V., 3047 AC Rotterdam (NL)
(72) Inventor: PAI, Cheng-Chung, Taichung City 43750 (TW); WANG, Shyi-Huei, Taichung City 434 (TW)
(74) Representative: Cohausz Hannig Borkowski Wißgott

(56) References cited:
- CN-A- 106 476 972
- CN-U- 208 134 542
- DE-U1- 9 216 489
- JP-U- 3 165 902
- US-B2- 6 647 826

## Description

### BACKGROUND OF THE INVENTION

### Field of the Invention

The present invention relates to an anti-skid pedal according to the preamble of claim 1. A pedal with these features is known from JP 3 165 902 U.

### Description of the Prior Art

In general, a bike pedal and an anti-skid structure are integrally formed of one piece. For example, a metal pedal has a rib structure integrally formed thereon and is configured to be engaged with a bottom of a shoe to provide anti-skid effect. However, the surface of the metal pedal is smooth when liquid is on the metal pedal, and thus the anti-skid effect of the metal pedal is poor. The foot of the user slips easily when pedaling. The user cannot stably pedal the pedal so that it is effort-consuming.

Moreover, the conventional anti-skid pedal has an anti-skid structure which may be formed to be integral thereon by injection molding in the molding process. However, the mold has to be designed according to any different one of molding processes so that the shape of the anti-skid structure is limited. Furthermore, the anti-skid structure may be welded on the anti-skid pedal, in which a high temperature is applied to the anti-skid structure for combination of the anti-skid structure to the pedal so that the structural strength of the anti-skid structure is degraded.

The present invention is, therefore, arisen to obviate or at least mitigate the above mentioned disadvantages.

### SUMMARY OF THE INVENTION

An object of the present invention is to provide an anti-skid pedal which is easy to manufacture and shape, and has good bonding strength.

To achieve the above and other objects, an anti-skid pedal is provided, including: a pedal body, having a pedaling portion; an anti-skid structure, disposed on the pedaling portion, including an anti-skid layer and a rubber layer, the rubber layer connected between the pedaling portion and the anti-skid layer, wherein the rubber layer includes a plurality of friction members and each friction member is a friction material or at least comprises a friction material, wherein the rubber layer includes 55% to 85% by weight of nitrile butadiene rubber (NBR), 1% to 25% by weight of fiber material, 1% to 30% by weight of friction material, 1% to 20% by weight of accelerating agent. Preferably, the rubber layer is made of or comprises brake shoe material of a brake pad.

The present invention will become more apparent from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a perspective view of a first preferable embodiment of the present invention;
Fig. 2 is a breakdown drawing of the first preferable embodiment of the present invention;
Fig. 3 is a top plan view of the first preferable embodiment of the present invention;
Fig. 4 is a cross-sectional view of the first preferable embodiment of the present invention;
Fig. 5 is a partially-enlarged view of Fig. 4.
Fig. 6 is a cross-sectional view of a second preferable embodiment of the present invention;
Fig. 7 is a partially-enlarged view of Fig. 6.
Fig. 8 is a cross-sectional view of a third preferable embodiment of the present invention;
Fig. 9 is a cross-sectional view of a fourth preferable embodiment of the present invention; and
Fig. 10 is a cross-sectional view of a fifth preferable embodiment of the present invention.

### DETAILED DESCRIPTION OF THE PREFERRED EMBODIMENTS

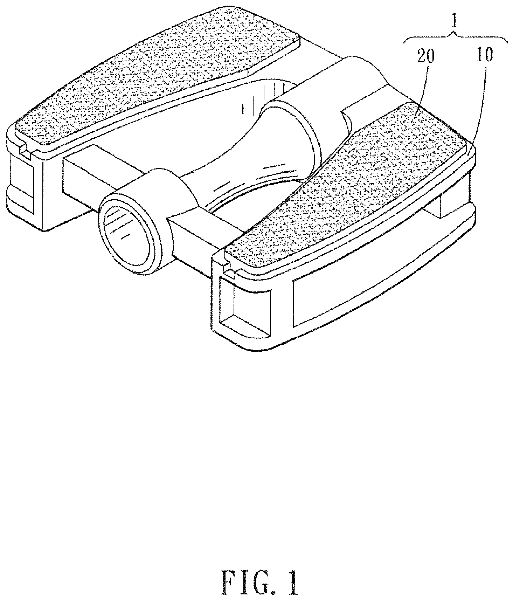

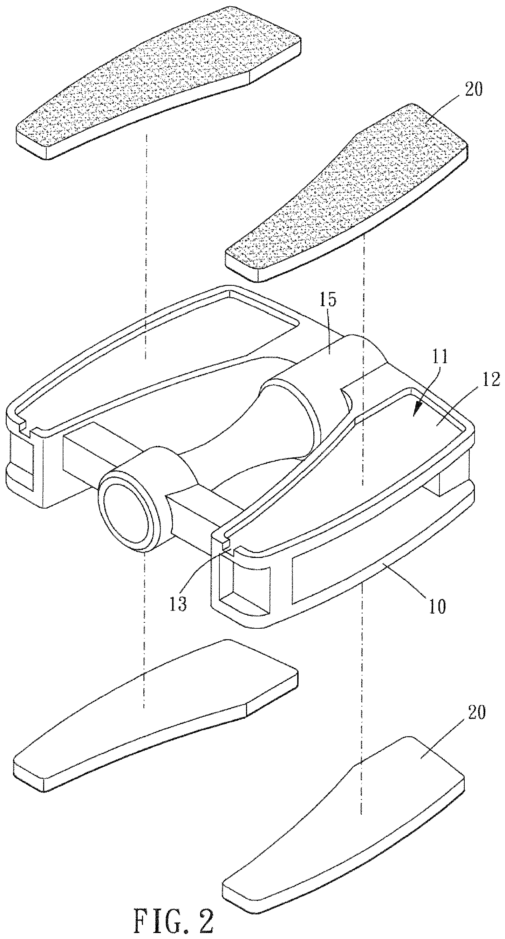

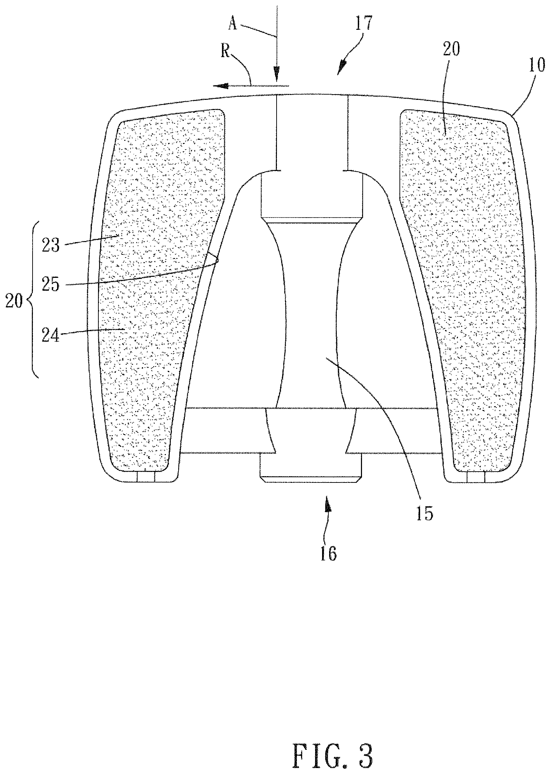

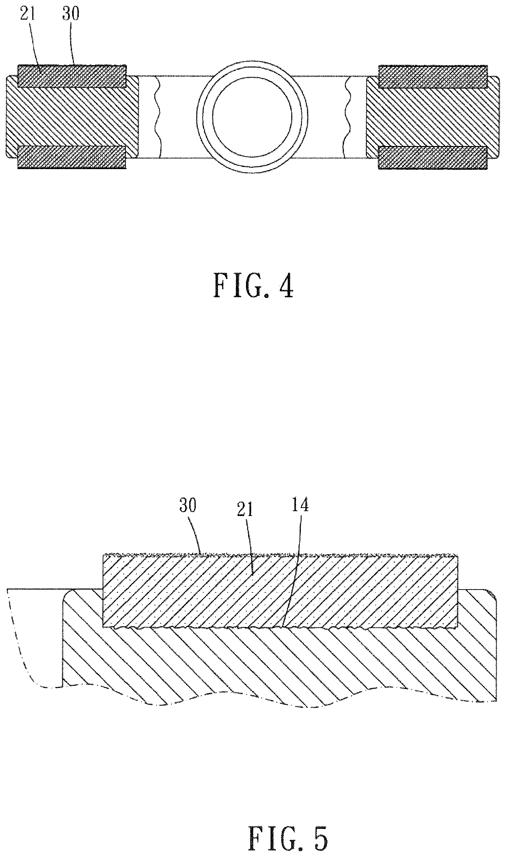

Figs. 1 to 5 show an anti-skid pedal according to a preferred embodiment of the present invention. The anti-skid pedal 1 includes a pedal body 10 and an anti-skid structure 20.

The pedal body 10 has a pedaling portion 11. The anti-skid structure 20 is disposed on the pedaling portion 11. The anti-skid structure 20 includes an anti-skid layer 30 and a rubber layer 21. The rubber layer 21 is connected between the pedaling portion 11 and the anti-skid layer 30. The rubber layer 21 is made of brake shoe material of a brake pad. The rubber layer 21 includes a plurality of friction members (shown by dots). The rubber layer 21 includes nitrile butadiene rubber (NBR), friction material, fiber material, accelerating agent, or any combination of the above-mentioned materials. Specifically, the rubber layer 21 includes 55% to 85% by weight of nitrile butadiene rubber (NBR), 1% to 25% by weight of fiber material, 1% to 30% by weight of friction material, 1% to 20% accelerating agent by weight of accelerating agent. The anti-skid structure 20 can be assembled to the pedal body 10 after the pedal body 10 is manufactured so that the anti-skid structure 20 can be formed into any one of required shapes and so that it has good bonding strength and good anti-skid effect. Furthermore, the anti-skid structure 20 and the pedal body 10 can be easily connected tightly with each other. Preferably, the rubber layer 21 includes 70% by weight of nitrile butadiene rubber (NBR), 10% by weight of fiber material, 15% by weight of friction material, 5% by weight of accelerating agent. Generally, in any embodiment each friction member is a friction material or at least comprises a friction material. Generally, a friction member may be a body composed of or comprising the friction material. For example, each friction member may be powdery, granular, fibrous or the like.

The friction material comprises ceramic powder, silicon monoxide, or any combination of above-mentioned materials, which improves the anti-skid effect and reduces wear rate of the rubber layer 21. Specifically, the fiber material is an artificial fiber material, or may be an inorganic fiber material, an organic fiber material, a steel fiber material or any of the former materials, which can meet the environmental requirements and reduce the density and the wear rate of the rubber layer 21.

The pedaling portion 11 has a recess 12, the anti-skid structure 20 is disposed within the recess 12, and a through hole 13 is disposed laterally through a wall of the recess 12 so that the anti-skid structure 20 can be assembled to the recess 12 or disassembled from the recess 12 easily. Preferably, the recess 12 has a bottom formed with a rugged structure 14, and the rubber layer 21 is bound with the rugged structure 14 to provide strong connection therebetween. The rugged structure 14 may be tooth shaped, wavy, step-shaped or the like.

Preferably, the pedal body 10 has an axial portion 15. The pedal body 10 further includes an inner side portion 16 and an outer side portion 17 opposite to the inner side portion 16. The axial portion 15 defines an axial direction A extending from the outer side portion 17 to the inner side portion 16, and the inner side portion 16 is configured to be closer to a crank than the outer side portion 17. The anti-skid structure 20 further includes a widened section 23, a narrowed section 24 and a lateral concave surface 25 which is radially concave, specifically a radial direction is designated with numeral "R", and the widened section 23 and the narrowed section 24 are arranged along the axial direction A in order. It is to be noted that the lateral concave surface 25 is an arced surface, and the arced surface extends gradually radially away from the axial portion 15 in the axial direction A. The lateral concave surface 25 can resist an external force in the axial direction A to prevent the anti-skid structure 20 from disengaging from the pedal body 10.

Furthermore, the anti-skid layer 30 is a rough surface. Specifically, the rough surface contains a plurality of granules, and the granules may have the same size or different sizes. Moreover, the anti-skid layer 30 and the rubber layer 21 may be made of the same material. The rubber layer 21 may be self-adhesive to the pedaling portions 11.

In this embodiment, the pedal body 10 includes two said pedaling portions 11. The anti-skid pedal 1 includes two said anti-skid structures 20. The two said pedaling portions 11 are disposed at two opposite sides of the axial portion 15 respectively, the two said anti-skid structure 20 are disposed on the two said pedaling portions 11 respectively. Moreover, a top and a bottom of the pedal body 10 are symmetrical; that is, the top and the bottom of the pedal body 10 have same structures.

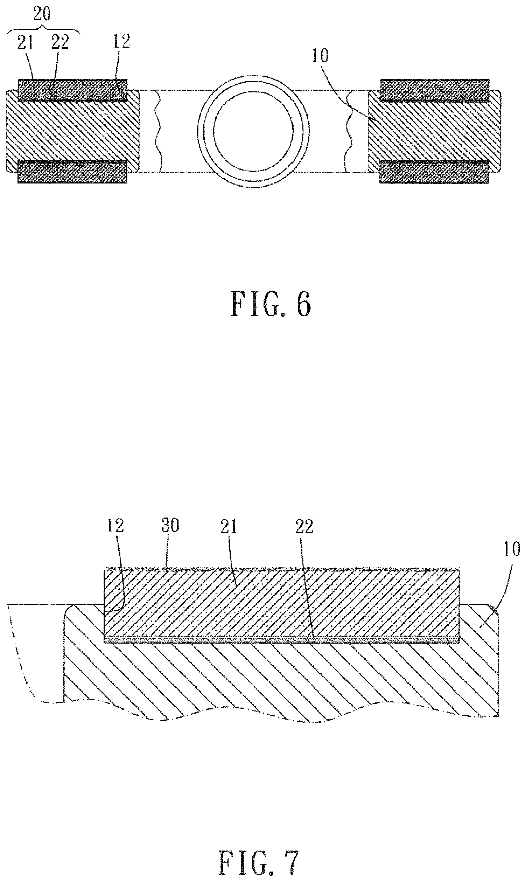

Figs. 6-7 refer to a second preferred embodiment. The anti-skid pedal 1 further includes a viscose layer 22 which bonds the rubber layer 21 and the pedaling portion 11, which provides strong connection between the rubber layer 21 and the pedaling portion 11.

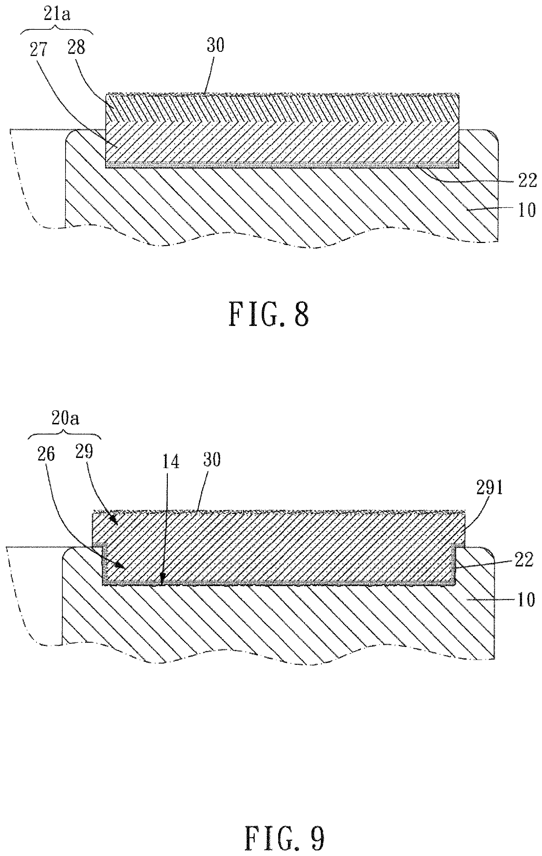

Fig. 8 refers to a third preferred embodiment. The rubber layer 21a includes a first shock absorbing portion 27 and a second shock absorbing portion28, and shock-absorbing capacity of the first shock absorbing portion 27 is different from shock-absorbing capacity of the second shock absorbing portion28. In this embodiment, the first shock absorbing portion 27 is greater than the second shock absorbing portion28 in hardness. The first shock absorbing portion 27 is disposed between the second shock absorbing portion 28 and pedal body. The rubber layer 21 is for comfortable pedaling and provides good support.

Fig. 9 refers to a fourth preferred embodiment. The anti-skid structure 20a further includes a narrowed bottom section 26 and a widened top section 29. The narrowed bottom section 26 is disposed within the recess 12. The widened top section 29 protrudes beyond the recess 12. The widened top section 29 has at least one lateral protruding portion 291, and the lateral protruding portion 291 extends laterally in a direction which is transverse to an open direction of the recess 12 and is connected with the pedal body 10. In this embodiment, the widened top section 29 has two said lateral protruding portions 291. The two said lateral protruding portions 291 are disposed on two opposite sides of the widened top section 29 respectively. The two said lateral protruding portions 291 can cover the gap(s) between the anti-skid structure 20a and the recess 12 so as to prevent accumulation of dust, particles or the like and to increase a connection area between the anti-skid structure 20a and the pedal body 10 for improvement of connection strength. Furthermore, the viscose layer 22 is connected between the two said lateral protruding portions 291 and the pedal body 10, and between the narrowed bottom section 26 and the pedal body 10.

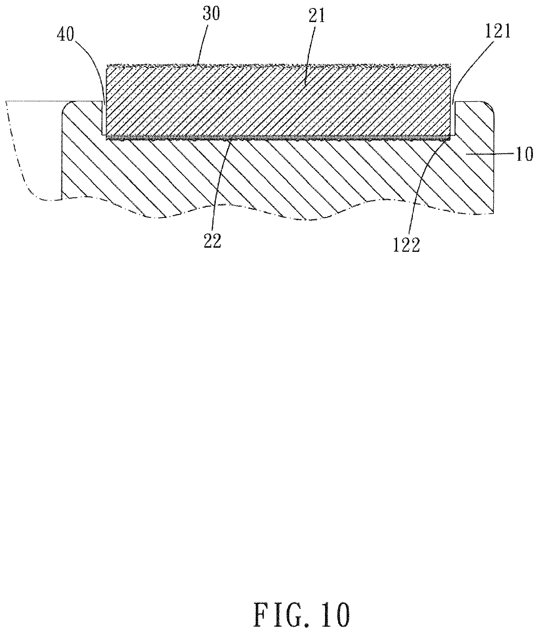

Fig. 10 refers to a fifth preferred embodiment. The recess 12 includes a widened portion 121 and a narrowed portion 122, the anti-skid structure 20 abuts against the narrowed portion 122. The anti-skid structure 20 and the widened portion 121 are spaced apart and define a gap 40 so that the anti-skid structure 20 and the recess 12 can be stably connected with each other without sliding, and the anti-skid structure can be deformed toward the gap 40.

Although particular embodiments of the invention have been described in detail for purposes of illustration, various modifications and enhancements may be made without departing from the scope of the invention. Accordingly, the invention is not to be limited except as by the appended claims.

## Claims

1. An anti-skid pedal (1), including a pedal body (10), having a pedaling portion (11) and an anti-skid structure (20, 20a), disposed on the pedaling portion (11), including an anti-skid layer (30) and a rubber layer (21), the rubber layer (21) being connected between the pedaling portion (11) and the anti-skid layer (30), preferably the anti-skid layer (30) being a rough surface, wherein the rubber layer (21), preferably being made of brake shoe material of a brake pad, includes a plurality of friction members and each friction member is a friction material or at least comprises a friction material, **characterised in that** the rubber layer (21) includes 55% to 85% by weight of nitrile butadiene rubber (NBR), 1% to 25% by weight of fiber material, 1% to 30% by weight of friction material, 1% to 20% by weight of accelerating agent.

2. The anti-skid pedal (1) of claim 1, wherein the pedaling portion (11) has a recess and the anti-skid structure (20, 20a) is disposed within the recess (12).

3. The anti-skid pedal (1) of claim 2, wherein a through hole (13) is disposed laterally through a wall of the recess (12).

4. The anti-skid pedal (1) of claim 2 or 3, wherein the recess (12) has a bottom formed with a rugged structure (14), and the rubber layer (21) is bound / bond with the rugged structure (14).

5. The anti-skid pedal (1) according claim 2 or 3 or 4, wherein the anti-skid structure (20a) further includes a narrowed bottom section (26) and a widened top section (29), the narrowed bottom section (26) is disposed within the recess (12), the widened top section (29) protrudes beyond the recess (12).

6. The anti-skid pedal (1) of claim 5, wherein the widened top section (29) has at least one lateral protruding portion (291), and the lateral protruding portion (291) extends laterally in a direction which is transverse to an open direction of the recess (12) and is connected with the pedal body (10).

7. The anti-skid pedal (1) according to anyone of the preceding claims 2, 3, 4, 5 or 6, wherein the recess (12) includes a widened portion (121) and a narrowed portion (122), the anti-skid structure (20, 20a) abuts against the narrowed portion (122), and the anti-skid structure (20, 20a) and the widened portion (121) are spaced apart and define a gap (40) therebetween.

8. The anti-skid pedal (1) according to anyone of the preceding claims, wherein the pedal body (10) has an axial portion (15), the pedal body (10) further includes an inner side portion (16) and an outer side portion (17) opposite to the inner side portion (16), the axial portion (15) defines an axial direction (A) extending from the outer side portion (17) to the inner side portion (16), the inner side portion (16) is configured to be closer to a crank than the outer side portion (17), the anti-skid structure (20, 20a) further includes a widened section (23), a narrowed section (24) and a lateral concave surface (25) which is radially concave, and the widened section (23) and the narrowed section (24) are arranged along the axial direction (A) in order.

9. The anti-skid pedal (1) of claim 8, wherein the lateral concave surface (25) is an arced surface, and the arced surface extends gradually radially away from the axial portion (15) in the axial direction (A).

10. The anti-skid pedal (1) according to anyone of the preceding claims, wherein the rubber layer (21) includes 70% by weight of nitrile butadiene rubber (NBR), 10% by weight of fiber material, 15% by weight of friction material, 5% by weight of accelerating agent;

11. The anti-skid pedal (1) according to anyone of the preceding claims, wherein a friction material comprises ceramic powder and/or silicon monoxide.

12. The anti-skid pedal (1) according to anyone of the preceding claims. wherein the fiber material is an artificial fiber material.

13. The anti-skid pedal (1) according to anyone of the preceding claims. wherein the rubber layer (21) includes a first shock absorbing portion (27) and a second shock absorbing portion (28), the shock-absorbing capacity of the first shock absorbing portion (27) being different from the shock-absorbing capacity of the second shock absorbing portion (28).

14. The anti-skid pedal (1) according to claim 13, wherein the first shock absorbing portion (27) is greater than the second shock absorbing portion (28) in hardness, and the first shock absorbing portion (27) is disposed between the second shock absorbing portion (28) and pedal body (10).

15. The anti-skid pedal (1) according to anyone of the preceding claims, wherein it includes a viscose layer (22) which bonds the rubber layer (21) and the pedaling portion (11).

## Patentansprüche

1. Antirutschpedal (1), umfassend einen Pedalkörper (10), der einen Pedalabschnitt (11) und eine Antirutschstruktur (20, 20a) aufweist, die auf dem Pedalabschnitt (11) angeordnet ist, die eine Antirutschschicht (30) und eine Kautschukschicht (21) umfasst, wobei die Kautschukschicht (21) zwischen dem Pedalabschnitt (11) und der Antirutschschicht (30) verbunden ist, wobei vorzugsweise die Antirutschschicht (30) eine raue Oberfläche ist, wobei die Kautschukschicht (21), die vorzugsweise aus einem Bremsbackenmaterial eines Bremsbelags besteht, eine Mehrzahl von Reibungselementen umfasst und jedes Reibungselemente ein Reibmaterial ist oder zumindest ein Reibmaterial umfasst, **dadurch gekennzeichnet, dass** die Kautschukschicht (21) 55 Gewichts-% bis 85 Gewichts-% Nitrilbutadienkautschuk (NBR), 1 Gewichts-% bis 25 Gewichts-% Fasermaterial, 1 Gewichts-% bis 30 Gewichts-% Reibmaterial, 1 Gewichts-% bis 20 Gewichts-% Beschleuniger umfasst.

2. Antirutschpedal (1) nach Anspruch 1, wobei der Pedalabschnitt (11) eine Vertiefung aufweist und die Antirutschstruktur (20, 20a) in der Vertiefung (12) angeordnet ist.

3. Antirutschpedal (1) nach Anspruch 2, wobei eine Durchgangsöffnung (13) lateral durch eine Wand der Vertiefung (12) angeordnet ist.

4. Antirutschpedal (1) nach Anspruch 2 oder 3, wobei die Vertiefung (12) einen Boden aufweist, der mit einer robusten Struktur (14) ausgebildet ist, und wobei die Kautschukschicht (21) mit der robusten Struktur (14) verbunden/verklebt ist.

5. Antirutschpedal (1) nach Anspruch 2 oder 3 oder 4, wobei die Antirutschstruktur (20a) ferner einen verschmälerten Bodenabschnitt (26) und einen verbreiterten oberen Abschnitt (29) umfasst, wobei der verschmälerte Bodenabschnitt (26) in der Vertiefung (12) angeordnet ist, wobei der verbreiterte obere Abschnitt (29) über die Vertiefung (12) hinausragt.

6. Antirutschpedal (1) nach Anspruch 5, wobei der verbreiterte obere Abschnitt (29) mindestens einen lateralen hervorstehenden Abschnitt (291) aufweist, und wobei sich der laterale hervorstehende Abschnitt (291) lateral in einer Richtung erstreckt, die quer zu einer Öffnungsrichtung der Vertiefung (12) ist, und mit dem Pedalkörper (10) verbunden ist.

7. Antirutschpedal (1) nach einem der vorhergehenden Ansprüche 2, 3, 4, 5 oder 6, wobei die Vertiefung (12) einen verbreiterten Abschnitt (121) und einen verschmälerten Abschnitt (122) umfasst, wobei die Antirutschstruktur (20, 20a) an dem verschmälerten Abschnitt (122) anliegt, und wobei die Antirutschstruktur (20, 20a) und der verbreiterte Abschnitt (121) beabstandet sind und einen Spalt (40) dazwischen definieren.

8. Antirutschpedal (1) nach einem der vorhergehenden Ansprüche, wobei der Pedalkörper (10) einen axialen Abschnitt (15) aufweist, wobei der Pedalkörper (10) ferner einen Innenseitenabschnitt (16) und einen Außenseitenabschnitt (17) gegenüber zu dem Innenseitenabschnitt (16) aufweist, wobei der axiale Abschnitt (15) eine axiale Richtung (A) definiert, die sich von dem Außenseitenabschnitt (17) zu dem Innenseitenabschnitt (16) erstreckt, wobei der Innenseitenabschnitt (16) dazu ausgelegt ist, näher an einer Kurbel zu sein als der Außenseitenabschnitt (17), wobei die Antirutschstruktur (20, 20a) ferner einen verbreiterten Abschnitt (23), einen verschmälerten Abschnitt (24) und eine laterale konkave Fläche (25) umfasst, die radial konkav ist, und wobei der verbreiterte Abschnitt (23) und der verschmälerte Abschnitt (24) entlang der axialen Richtung (A) in Reihenfolge angeordnet sind.

9. Antirutschpedal (1) nach Anspruch 8, wobei die laterale konkave Fläche (25) eine gebogene Fläche ist, und wobei sich die gebogene Fläche allmählich radial von dem axialen Abschnitt (15) weg in der axialen Richtung (A) erstreckt.

10. Antirutschpedal (1) nach einem der vorhergehenden Ansprüche, wobei die Kautschukschicht (21) 70 Gewichts-% Nitrilbutadienkautschuk (NBR), 10 Gewichts-% Fasermaterial, 15 Gewichts-% Reibmaterial, 5 Gewichts-% Beschleuniger umfasst;

11. Antirutschpedal (1) nach einem der vorhergehenden Ansprüche, wobei ein Reibmaterial Keramikpulver und/oder Siliziummonoxid umfasst.

12. Antirutschpedal (1) nach einem der vorhergehenden Ansprüche, wobei das Fasermaterial ein künstliches Fasermaterial ist.

13. Antirutschpedal (1) nach einem der vorhergehenden Ansprüche, wobei die Kautschukschicht (21) einen ersten Stoßdämpfungsabschnitt (27) und einen zweiten Stoßdämpfungsabschnitt (28) umfasst, wobei sich das Stoßdämpfungsvermögen des ersten Stoßdämpfungsabschnitts (27) von dem Stoßdämpfungsvermögen des zweiten Stoßdämpfungsabschnitts (28) unterscheidet.

14. Antirutschpedal (1) nach Anspruch 13, wobei der erste Stoßdämpfungsabschnitt (27) eine größere Härte als der zweite Stoßdämpfungsabschnitt (28) aufweist, und wobei der erste Stoßdämpfungsabschnitt (27) zwischen dem zweiten Stoßdämpfungsabschnitt (28) und dem Pedalkörper (10) angeordnet ist.

15. Antirutschpedal (1) nach einem der vorhergehenden Ansprüche, wobei es eine Viskoseschicht (22) umfasst, die die Kautschukschicht (21) und den Pedalabschnitt (11) verklebt.

## Revendications

1. Pédale anti-dérapante (1), incluant un corps de pédale (10) ayant une partie de pédalage (11) et une structure anti-dérapante (20, 20a), disposée sur la partie de pédalage (11), incluant une couche anti-dérapante (30) et une couche de caoutchouc (21), la couche de caoutchouc (21) étant reliée entre la partie de pédalage (11) et la couche anti-dérapante (30), de préférence la couche anti-dérapante (30) étant une surface rugueuse, dans laquelle la couche de caoutchouc (21), étant de préférence faite de matériau de patin de frein d'une plaquette de frein, inclut une pluralité d'éléments de frottement et chaque élément de frottement est un matériau de frottement ou comprend au moins un matériau de frottement, **caractérisée en ce que** la couche de caoutchouc (21) inclut de 55 % à 85 % en poids de caoutchouc nitrile-butadiène (NBR), de 1 % à 25 % en poids de matériau fibreux, de 1 % à 30 % en poids de matériau de frottement, de 1 % à 20 % en poids d'agent accélérateur.

2. Pédale anti-dérapante (1) selon la revendication 1, dans laquelle la partie de pédalage (11) a un évidement et la structure anti-dérapante (20, 20a) est disposée à l'intérieur de l'évidement (12).

3. Pédale anti-dérapante (1) selon la revendication 2, dans laquelle un trou débouchant (13) est disposé latéralement à travers une paroi de l'évidement (12).

4. Pédale anti-dérapante (1) selon la revendication 2 ou 3, dans laquelle l'évidement (12) a un fond formé avec une structure rugueuse (14), et la couche de caoutchouc (21) est liée / en liaison avec la structure rugueuse (14).

5. Pédale anti-dérapante (1) selon la revendication 2 ou 3 ou 4, dans laquelle la structure anti-dérapante (20a) inclut en outre une section inférieure rétrécie (26) et une section supérieure élargie (29), la section inférieure rétrécie (26) est disposée à l'intérieur de l'évidement (12), la section supérieure élargie (29) fait saillie au-delà de l'évidement (12).

6. Pédale anti-dérapante (1) selon la revendication 5, dans laquelle la section supérieure élargie (29) a au moins une partie saillante latérale (291), et la partie saillante latérale (291) s'étend latéralement dans une direction qui est transversale à une direction ouverte de l'évidement (12) et est reliée au corps de pédale (10).

7. Pédale anti-dérapante (1) selon l'une quelconque des revendications précédentes 2, 3, 4, 5 ou 6, dans laquelle l'évidement (12) inclut une partie élargie (121) et une partie rétrécie (122), la structure anti-dérapante (20, 20a) prend appui contre la partie rétrécie (122), et la structure anti-dérapante (20, 20a) et la partie élargie (121) sont espacées l'une de l'autre et définissent un espace (40) entre celles-ci.

8. Pédale anti-dérapante (1) selon l'une quelconque des revendications précédentes, dans laquelle le corps de pédale (10) a une partie axiale (15), le corps de pédale (10) inclut en outre une partie latérale intérieure (16) et une partie latérale extérieure (17) opposée à la partie latérale intérieure (16), la partie axiale (15) définit une direction axiale (A) s'étendant depuis la partie latérale extérieure (17) jusqu'à la partie latérale intérieure (16), la partie latérale intérieure (16) est configurée pour être plus près d'une manivelle que la partie latérale extérieure (17), la structure anti-dérapante (20, 20a) inclut en outre une section élargie (23), une section rétrécie (24) et une surface concave latérale (25) qui est radialement concave, et la section élargie (23) et la section rétrécie (24) sont agencées le long de la direction axiale (A) dans l'ordre.

9. Pédale anti-dérapante (1) selon la revendication 8, dans laquelle la surface concave latérale (25) est une surface arquée, et la surface arquée s'étend progressivement radialement à l'opposé de la partie axiale (15) dans la direction axiale (A).

10. Pédale anti-dérapante (1) selon l'une quelconque des revendications précédentes, dans laquelle la couche de caoutchouc (21) inclut 70 % en poids de caoutchouc nitrile-butadiène (NBR), 10 % en poids de matériau fibreux, 15 % en poids de matériau de frottement, 5 % en poids d'agent accélérateur.

11. Pédale anti-dérapante (1) selon l'une quelconque des revendications précédentes, dans laquelle un matériau de frottement comprend de la poudre de céramique et/ou du monoxyde de silicium.

12. Pédale anti-dérapante (1) selon l'une quelconque des revendications précédentes, dans laquelle le matériau fibreux est un matériau fibreux artificiel.

13. Pédale anti-dérapante (1) selon l'une quelconque des revendications précédentes, dans laquelle la couche de caoutchouc (21) inclut une première partie d'amortissement de chocs (27) et une seconde partie d'amortissement de chocs (28), la capacité d'amortissement de chocs de la première partie d'amortissement de chocs (27) étant différente de la capacité d'amortissement de chocs de la seconde partie d'amortissement de chocs (28).

14. Pédale anti-dérapante (1) selon la revendication 13, dans laquelle la dureté de la première partie d'amortissement de chocs (27) est supérieure à celle de la seconde partie d'amortissement de chocs (28), et la première partie d'amortissement de chocs (27) est disposée entre la seconde partie d'amortissement de chocs (28) et le corps de pédale (10).

15. Pédale anti-dérapante (1) selon l'une quelconque des revendications précédentes, dans laquelle elle inclut une couche de viscose (22) qui lie la couche de caoutchouc (21) et la partie de pédalage (11).
